# EUROPÄISCHE PATENTANMELDUNG

(11) **EP 1 603 012 A2**
(43) Veröffentlichungstag der Anmeldung: **07.12.2005**
(21) Anmeldenummer: 05011658.1
(22) Anmeldetag: 31.05.2005
(51) Int. Cl.: G06F 3/02, H01H 13/702

(54) **Tastatur**

(30) Priorität: 03.06.2004 DE 202004008826 U
(71) Anmelder: SCHURTER GmbH, D-79346 Endingen (DE)
(72) Erfinder: Dietrich, Albrecht, 77955 Ettenheimweiler (DE); Kirmse, Reiner, 79346 Endingen (DE); Weisenberger, Manuela, 79346 Endingen (DE)
(74) Vertreter: Goy, Wolfgang

(57) **Zusammenfassung**

Eine Tastatur weist wenigstens einen, in einer Frontplatte (8) angeordneten Betätiger (9), einen unterhalb des Betätigers (9) angeordneten elektrischen Schalter (2) sowie eine unterhalb des elektrischen Schalters (2) angeordnete Trägerplatte (1) auf. Um einen verbesserten Vandalenschutz zu schaffen, schlägt die Erfindung vor, daß der Tastatur eine elastische Einrichtung (11) zugeordnet ist, welche Krafteinwirkungen auf die Tastatur dämpft.

## Beschreibung

Die Erfindung betrifft eine Tastatur nach dem Oberbegriff des Anspruchs 1.

Es sind vielfältige Ausführungsformen von Tastaturen bekannt. Bei einer Ausführungsform einer Tastatur ist wenigstens ein Betätiger vorgesehen, welcher in einer Frontplatte der Tastatur angeordnet ist. Unterhalb des Betätigers befindet sich ein elektrisches Schaltpaket, welches mittels des Betätigers geschaltet werden kann. Schließlich befindet sich zuunterst eine Trägerplatte.

Ein Problem bei derartigen Tastaturen ist der sogenannte Vandalenschutz, also der Schutz der Tastatur bei Gewalteinwirkung. Hier werden vom Markt her immer höhere Anforderungen an den Schutzgrad gegen Schläge gestellt. Auch Normen zeigen hier steigende Tendenz in Sachen Schlag- und Fallschutz.

Ein Vandalenschutz sieht beispielsweise vor, die Frontplatte sowie den Betätiger aus Metall zu fertigen. Dennoch kann in die Tastatur so viel Energie eingeleitet werden, daß es zu irreversiblen Deformationen und Zerstörungen kommt, die zu Funktionsausfällen führen.

Davon ausgehend liegt der Erfindung die **Aufgabe** zugrunde, eine Tastatur der eingangs angegebenen Art mit einem verbessertem Vandalenschutz zu schaffen.

Die technische **Lösung** ist gekennzeichnet durch die Merkmale im Kennzeichen des Anspruchs 1.

Dadurch ist eine Tastatur mit einem sehr hohen Vandalenschutz geschaffen, welcher bisher noch nicht erreicht worden ist. Die Grundidee der erfindungsgemäßen Tastatur besteht darin, daß durch die Integration einer elastischen Einrichtung der Tastatur gewissermaßen ein Bremsweg verliehen wird, welcher bei Krafteinwirkung derart viel Energie absorbiert, daß es zu keinen irreversiblen Deformationen und Zerstörungen kommt, so daß es auch nicht zu Funktionsausfällen bei einer derartigen mutwilligen Krafteinwirkung kommt. Somit wird die Energie eines Aufschlags nicht mehr wie bisher auf einem sehr kurzen Wege von einigen Zehntel Millimetern vernichtet, sondern auf einem Weg im Millimeter-Bereich. Die dadurch auftretenden Beschleunigungen und Kräfte sind im Vergleich zu bekannten Tastaturen um einiges geringer, so daß die Tastatur auch bei massiven Krafteinwirkungen immer noch funktionsfähig bleibt.

Vorzugsweise handelt es sich gemäß der Weiterbildung in Anspruch 2 bei der elastischen Einrichtung um ein flächiges Gebilde. Dieses flächige Gebilde kann in der Tastatur problemlos integriert werden. Insbesondere hat das flächige Gebilde den Vorteil, daß es technisch sehr einfach integriert werden kann und daß durch die relativ große Fläche sehr viel Energie absorbiert werden kann.

Eine bevorzugte Weiterbildung schlägt gemäß Anspruch 3 vor, daß - wie bereits zuvor ausgeführt - die Dicke des flächigen Gebildes im Millimeter-Bereich liegt. Dabei kann die Dicke des flächigen Gebildes insbesondere im Bereich von 1 bis 5 mm liegen. Dadurch steht ein sehr großer Weg zur Verfügung, um auch bei massiven Krafteinwirkungen geringe Beschleunigungen sowie Kräfte auftreten zu lassen.

Vorzugsweise handelt es sich bei der elastischen Einrichtung gemäß der Weiterbildung in Anspruch 4 um ein insbesondere thermisches Kunststoffgel. Dieses Material hat eine besonders geeignete Dämpfungscharakteristik. Andere Materialien sind jedoch ohne weiteres auch denkbar.

In einer ersten Ausführungsvariante gemäß Anspruch 5 ist die elastische Einrichtung unterhalb der Trägerplatte angeordnet. Somit wird unter die Tastatur ein elastisches Medium eingebaut, welches die Krafteinwirkungen auf den Betätiger bzw. auf die Frontplatte absorbiert.

Dabei ist gemäß einer Weiterbildung in Anspruch 5 die elastische Einrichtung zwischen der Trägerplatte und einer Stützplatte angeordnet. Diese Stützplatte besteht vorzugsweise aus Metall, beispielsweise Edelstahl, und dient als Gegenlager.

Eine zweite Ausführungsvariante sieht gemäß Anspruch 7 vor, daß die elastische Einrichtung zwischen dem elektrischen Schalter und der Trägerplatte angeordnet ist. Somit ist das elastische Medium direkt in der Tastatur integriert. Dies stellt hinsichtlich der Anzahl der Teile sowie hinsichtlich der Kosten einen sehr günstigen Weg zur Realisierung eines Vandalenschutzes dar.

Schließlich schlägt die Weiterbildung hiervon gemäß Anspruch 8 vor, daß zwischen dem elektrischen Schalter und der elastischen Einrichtung eine Abstützzwischenlage angeordnet ist.

Zwei Ausführungsbeispiele einer erfindungsgemäßen Tastatur mit Vandalenschutz werden nachfolgend anhand der Zeichnungen beschrieben. In diesen zeigt:
- Fig. 1: einen Schitt durch eine erste Ausführungsvariante;
- Fig. 2: einen Schnitt durch eine zweite Ausführungsvariante.

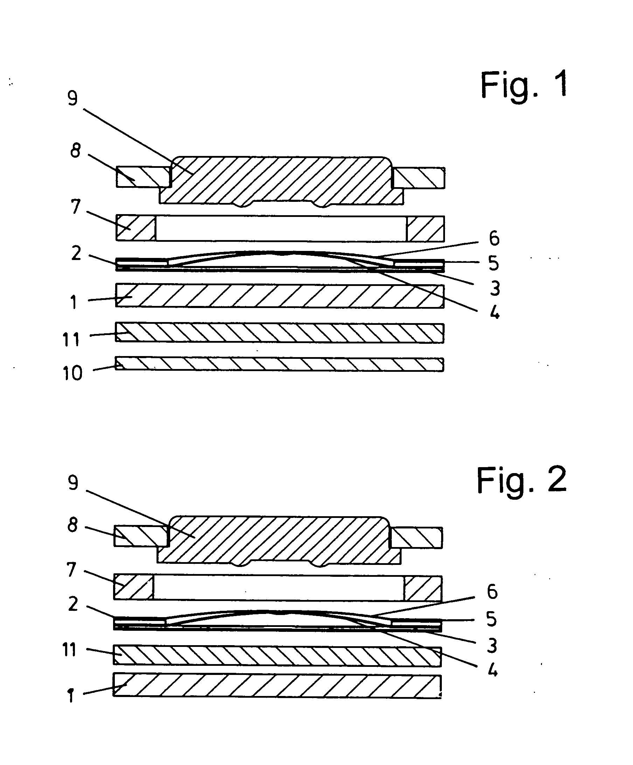

Die Tastatur der ersten Ausführungsvariante in Fig. 1 weist eine Trägerplatte 1 auf. Auf dieser befindet sich ein elektrischer Schalter 2 in Form eines Schaltpaketes aus einer Leiterplatte 3, einer Schnappscheibe 4, einer Arretierfolie 5 sowie einer Dichtungsfolie 6. Unter Zwischenanordnung einer Distanzplatte 7 ist zuoberst eine Frontplatte 8 mit einem integrierten Betätiger 9 vorgesehen.

Unterhalb des so ausgebildeten Tasters befindet sich zwischen der Trägerplatte 1 und einer Stützplatte 10 eine elastische Einrichtung 11 in Form eines flächigen Gebildes aus einem thermischen Kunststoffgel. Die Dicke liegt im Bereich von 1 bis 5 mm.

### Die Funktionsweise ist wie folgt:

Die Tastatur wird - in herkömmlicher Weise - dadurch betätigt, daß der Betätiger 9 nach unten gedrückt wird, so daß der elektrische Schalter 2, nämlich die Schappscheibe 4 betätigt wird und einen Schaltvorgang auslöst. Bei einer massiven, zerstörerischen Krafteinwirkung auf den Betätiger 9 oder auf die Trägerplatte 1 wird die Energie mittels der elastischen Einrichtung 11 auf einem Weg im Millimeter-Bereich vernichtet, so daß nur relativ geringe Beschleunigungen und Kräfte auftreten, so daß es nicht zu irreversiblen Deformationen und Zerstörungen kommt, was letztendlich zu Funktionsausfällen führen kann.

Die zweite Ausführungsvariante in Fig. 2 unterscheidet sich von der ersten Ausführungsvariante dadurch, daß die elastische Einrichtung 11 zwischen dem elektrischen Schalter 2 und der Trägerplatte 1 angeordnet ist. Eine Stützplatte 10 ist nicht vorgesehen. Eventuell kann eine - nicht dargestellte - Zwischenlage zur Abstützung zwischen dem elektrischen Schalter 2 und der elastischen Einrichtung 11 vorgesehen sein.

Die Funktionsweise ist ähnlich der ersten Ausführungsvariante in Fig. 1, d. h. eine Krafteinleitung in die Tastatur wird von der elastischen Einrichtung 11 absorbiert.

### Bezugszeichenliste

- 1: Trägerplatte
- 2: elektrischer Schalter
- 3: Leiterplatte
- 4: Schnappscheibe
- 5: Arretierfolie
- 6: Dichtungsfolie
- 7: Distanzplatte
- 8: Frontplatte
- 9: Betätiger
- 10: Stützplatte
- 11: elastische Einrichtung

## Patentansprüche

1. Tastatur
mit wenigstens einem, in einer Frontplatte (8) angeordneten Betätiger (9),
mit einem unterhalb des Betätigers (9) angeordneten elektrischen Schalter (2) sowie
mit einer unterhalb des elektrischen Schalters (2) angeordneten Trägerplatte (1),
**dadurch gekennzeichnet,**
**daß** der Tastatur eine elastische Einrichtung (11) zugeordnet ist, welche Krafteinwirkungen auf die Tastatur dämpft.

2. Tastatur nach dem vorhergehenden Anspruch,
**dadurch gekennzeichnet,**
**daß** die elastische Einrichtung (11) ein flächiges Gebilde ist.

3. Tastatur nach Anspruch 2,
**dadurch gekennzeichnet,**
**daß** die Dicke des flächigen Gebildes im Millimeter-Bereich liegt.

4. Tastatur nach einem der vorhergehenden Ansprüche,
**dadurch gekennzeichnet,**
**daß** die elastische Einrichtung (11) ein insbesondere thermisches Kunststoffgel ist.

5. Tastatur nach einem der Ansprüche 1 bis 4,
**dadurch gekennzeichnet,**
**daß** die elastische Einrichtung (11) unterhalb der Trägerplatte (1) angeordnet ist.

6. Tastatur nach Anspruch 5,
**dadurch gekennzeichnet,**
**daß** die elastische Einrichtung (11) zwischen der Trägerplatte (1) und einer Stützplatte (10) angeordnet ist.

7. Tastatur nach einem der Ansprüche 1 bis 4,
**dadurch gekennzeichnet,**
**daß** die elektrische Einrichtung (11) zwischen dem elektrischen Schalter (2) und der Trägerplatte (1) angeordnet ist.

8. Tastatur nach Anspruch 7,
**dadurch gekennzeichnet,**
**daß** zwischen dem elektrischen Schalter (2) und der elastischen Einrichtung (11) eine Abstützzwischenlage angeordnet ist.
